# EUROPÄISCHE PATENTSCHRIFT

(11) **EP 1 111 118 B1**
(45) Veröffentlichungstag und Bekanntmachung des Hinweises auf die Patenterteilung: **11.08.2004**
(21) Anmeldenummer: 00124544.8
(22) Anmeldetag: 09.11.2000
(51) Int. Cl.: D06F 39/00

(54) **Wasserführendes Haushaltgerät**
Water-carrying domestic appliance
Appareil ménager véhiculant de l'eau

(30) Priorität: 16.12.1999 DE 19960812
(43) Veröffentlichungstag der Anmeldung: 27.06.2001
(73) Patentinhaber: BSH Bosch und Siemens Hausgeräte GmbH, 81739 München (DE)
(72) Erfinder: Stickel, Ernst, 89537 Giengen (DE); Eiermann, Rüdiger, 89428 Syrgenstein (DE)

(56) Entgegenhaltungen:
- DE-A- 2 501 165
- DE-A- 4 403 737
- US-A- 5 220 954

## Beschreibung

Die Erfindung betrifft ein wasserführendes Haushaltgerät mit mindestens einem Abwasserkanal und einem Frischwasserkanal, sowie mit einem Latentwärmespeicher gemäß dem Oberbegriff des Patentanspruchs 1.

In der DE 44 03 737 A1 ist ein wasserführendes Haushaltgerät in Form einer Waschoder Geschirrspülmaschine mit einem Wärmetauscher beschrieben, der einen mit einem Medium zum latenten Speichern von Wärmeenergie angefüllten Hohlraum - auch als Latentwärmespeicher bekannt - aufweist. Der im Wärmetauscher befindliche Latentwärmespeicher trennt einen Primärkreis für den Zulauf von Abwasser von einem Sekundärkreis für den Zulauf von Frischwasser und sorgt für einen Austausch der Wärmeenergie zwischen dem Inhalt im Primärkreis und dem Medium einerseits sowie zwischen dem Medium und dem Inhalt im Sekundärkreis andererseits. Der Wärmetauscher mit dem Zweikanalsystem, umfassend mindestens einen Abwasserkanal und einen Frischwasserkanal, arbeitet als Durchlaufwärmetauscher, der durch den Latentwärmespeicher die in dem - üblicherweise aus einem Spülbehälter abgepumpten - Abwasser enthaltene Wärmeenergie aufnimmt, speichert und zu einem späteren Zeitpunkt - beispielsweise bei der nächsten Füllung des Haushaltgeräts - an das zugeführte Frischwasser zumindest teilweise abgibt. Der Wirkungsgrad des Wärmeenergieaustausches ist bei dem bekannten Durchlaufwärmetauscher mit integriertem Latentwärmespeicher beschränkt, da er gemäß dem Gegenstromprinzip arbeitet - d. h. er wird auf der einen Seite nur von Abwasser und auf der anderen Seite nur von Frischwasser umflossen -.

Es ist Aufgabe der vorliegenden Erfindung, ein wasserführendes Haushaltgerät anzugeben, bei dem ein verbesserter Wirkungsgrad des Wärmeaustausches erzielt wird.

Diese Aufgabe wird gemäß der Erfindung durch die Merkmale des Patentanspruchs 1 gelöst. Weiterbildungen der Erfindung sind den Unteransprüchen zu entnehmen.

Ausgehend von einem wasserführenden Haushaltgerät mit mindestens einem Abwasserkanal und einem Frischwasserkanal, sowie mit einem Latentwärmespeicher zur Aufnahme, Speicherung und Abgabe von Wärmeenergie ist gemäß dem Gegenstand der Erfindung der Latentwärmespeicher in dem Frischwasserkanal integriert und dabei derart angeordnet, daß sowohl ein Gleichstromdurchlauf als auch ein Gegenstromdurchlauf des Frischwassers zur Fließrichtung des Abwassers entstehen. Durch das gleichzeitige Entstehen von Gleichstromdurchlauf und Gegenstromdurchlauf ergibt sich eine Umspülung des erfindungsgemäß angeordneten Latentwärmespeichers mit Frischwasser, was die Menge der übertragbaren Wärmeenergie erhöht und damit eine sehr gute Wärmeübertragung vom Abwasser auf das Frischwasser bewirkt. Die auf diese Weise im Latentwärmespeicher rückgewonnene Wärmeenergie kann über einen längeren Zeitraum gespeichert werden und beim nächsten Einfüllen des Frischwassers auf dieses mit einem hohen Wirkungsgrad übertragen werden. Insgesamt ergibt sich durch den Gegenstand der Erfindung eine besonders effektive Wärmeenergierückgewinnung, die den Energieverbrauch des Haushaltgeräts bei Spülvorgängen äußerst niedrig hält.

Gemäß einer Weiterbildung der Erfindung hat es sich als vorteilhaft erwiesen, daß durch die Anordnung des Latentwärmespeichers in dem Frischwasserkanal zwei Teilkanäle ausgebildet sind, die den Gleichstromdurchlauf vom Gegenstromdurchlauf trennen, so daß der Latentwärmespeicher beidseitig vom Frischwasser umflossen wird. Dies bewirkt eine sehr gute Wärmeübertragung und eine Verkürzung der Aufheizzeit für Spülvorgänge mit beheizter Reinigungsflüssigkeit.

Gemäß einer anderen günstigen Ausgestaltung der Erfindung sind der Latentwärmespeicher sowie Frischwasserkanal und Abwasserkanal von einer Wärmeisolierung umschlossen, was in Kombination mit den erfindungsgemäßen Merkmalen den Wirkungsgrad der Wärmeenergiespeicherung und -übertragung noch weiter verbessert.

Darüber hinaus hat sich als vorteilhaft herausgestellt, daß ein den Latentwärmespeicher umgehender Bypass-Kanal vorgesehen ist, durch die das Frischwasser zum Spülbehälter oder das Abwasser vom Spülbehälter direkt geleitet wird. Damit vermeidet das Frischwasser den Durchlauf durch den Latentwärmespeicher, was Zeit und unnötigen Energieaufwand für bestimmte Anwendungsfälle spart. Ein bevorzugter Anwendungsfall liegt dann vor, wenn der Bypass-Kanal für Teilprogrammschritte, bei denen jeweils das Frischwasser als unbeheizte Reinigungsflüssigkeit benutzt wird, angesteuert wird. Beispielhafte Teilprogrammschritte des wasserführenden Haushaltgeräts sind "Vorspülen" und "Zwischenspülen".

Die Erfindung wird anhand eines in der Zeichnung dargestellten Ausführungsbeispiels näher erläutert. Im einzelnen zeigen
- Fig. 1: die erfindungsgemäße Anordnung des Latentwärmespeichers, und
- Fig. 2: die Steuerung des Durchlaufs von Frischwasser und Abwasser in Abhängigkeit der einzelnen Teilprogrammschritte und der entsprechenden Füllmenge und Temperatur der Spülflüssigkeit.

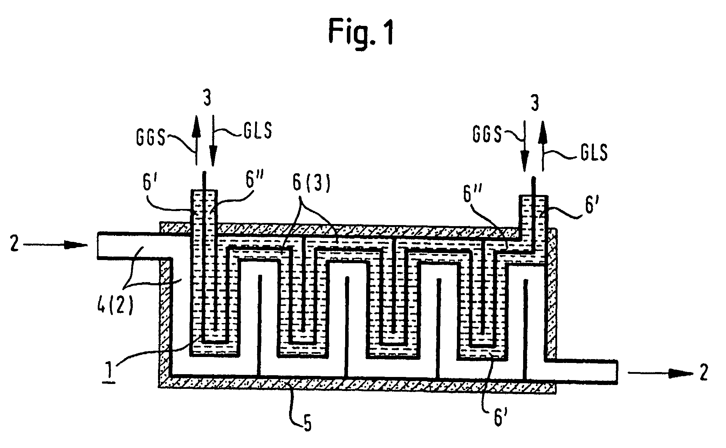

Fig. 1 zeigt die Anordnung eines Latentwärmespeichers 1 in Bezug auf einen Abwasser 2 führenden Abwasserkanal 4 und einen Frischwasser 3 führenden Frischwasserkanal 6, die in einem - nicht näher dargestellten - wasserführenden Haushaltgerät vorhanden sind. Das wasserführende Haushaltgerät ist beispielsweise eine Geschirrspülmaschine oder eine Waschmaschine. Der Abwasserkanal 4 dient zum Zulauf des aus einem Spülbehälter des Haushaltgeräts - üblicherweise nach der Durchführung eines Teilprogrammschritts wie z.B. "Vorspülen" - abgepumptem Abwassers 2, während der Frischwasserkanal 6 für den Zulauf von Frischwasser 3 - üblicherweise vor der Durchführung eines weiteren Teilprogrammschritts wie z.B. "Reinigen" - zu diesem Spülbehälter sorgt. Im vorliegenden Beispiel sind der Frischwasserkanal 4 und der Abwasserkanal 6 nach Art einer Ziehharmonika geformt und grenzen aneinander an. Die Fließrichtungen des Abwassers 2 im Abwasserkanal 4 und des Frischwassers 3 im Frischwasserkanal 6 verlaufen im Beispiel jeweils von links nach rechts und sind für das Abwasser 2 durch horizontale Richtungspfeile und für das Frischwasser 3 durch vertikale Richtungspfeile dargestellt. Der Latentwärmespeicher 1 ist mit einem Medium wie z.B. einer Chemikalie - vorzugsweise Kalziumchlorid - gefüllt, um von dem abgepumpten Abwasser 2 im Abwasserkanal 4 die Wärmeenergie aufzunehmen, diese zwischenzuspeichem und an das zugeführte Frischwasser 3 im Frischwasserkanal 6 wieder abzugeben. Dadurch entsteht eine Wärmeenergierückgewinnung, die den Energiebedarf des Haushaltgeräts deutlich senkt. Vorzugsweise sind Abwasserkanal 4 sowie Frischwasserkanal 6 und der Latentwärmespeicher 1 in einem - nicht näher dargestellten - Durchlaufwärmetauscher bekannter Art angeordnet, der in dem Haushaltgerät normalerweise zum Wärmeaustausch für die Erwärmung des Frischwassers benutzt wird. Eine maximal aus dem abgepumpten Abwasser rückgewinnbare Wärmeenergie, erzielbar durch die nachfolgend beschriebene Methode gemäß der Erfindung, wirkt vor allem bei Haushaltgeräten, die keinen Durchlaufwärmetauscher aufweisen, sehr energiesparend.

Erfindungsgemäß ist der Latentwärmspeicher 1 in dem Frischwasserkanal 6 integriert - vorzugsweise etwa mittig innerhalb des Kanals - und dabei derart angeordnet, daß sowohl ein Gleichstromdurchlauf GLS als auch ein Gegenstromdurchlauf GGS des Frischwassers 3 entstehen. Vorzugsweise sind zwei Teilkanäle 6' und 6" ausgebildet, die den Gleichstromdurchlauf GLS vom Gegenstromdurchlauf GGS trennen, so daß der Latentwärmespeicher 1 beidseitig vom Frischwasser 3 umflossen wird. Die in dem durch den Abwasserkanal 4 geleiteten Abwasser 2 enthaltene Wärmeenergie wird von dem im Frischwasserkanal 6 integrierten Latentwärmespeicher 1 aufgenommen und gespeichert. Durch die Umspülung innerhalb des Frischwasserkanals 6 angeordneten Latentwärmespeichers 1 mit Frischwasser 3 in getrennten Teilkanälen 6', 6" erhöht sich die Menge der übertragbaren Wärmeenergie und bewirkt damit eine sehr gute Wärmeübertragung auf das Frischwasser. Die auf diese Weise im Latentwärmespeicher rückgewonnene Wärmeenergie kann über einen längeren Zeitraum gespeichert werden und beim nächsten Einfüllen des Frischwassers auf dieses mit einem hohen Wirkungsgrad übertragen werden. Das Prinzip des gleichzeitigen Gleich-/Gegenstromdurchlaufs GLS/GGS im Frischwasserkanal 6 führt zu einer besonders effektiven Wärmeenergierückgewinnung, die den Energieverbrauch des Haushaltgeräts bei Spülvorgängen äußerst niedrig hält. Ein weiterer Vorteil der erfindungsgemäßen Anordnung des Latentwärmespeichers 1 besteht in der Verkürzung der Aufheizzeit für bestimmte Teilprogrammschritte, z. B. für Spülvorgänge mit beheizter Reinigungsflüssigkeit.

Der Latentwärmespeicher 1 sowie Frischwasserkanal 6 und Abwasserkanal 4 sind vorzugsweise vollständig von einer Wärmeisolierung 5 umschlossen, was in Kombination mit den erfindungsgemäßen Merkmalen den Wirkungsgrad der Wärmeenergiespeicherung und -übertragung noch weiter verbessert. Darüber hinaus hat sich als vorteilhaft herausgestellt, daß ein den Latentwärmespeicher 1 umgehender - nicht näher dargestellter - Bypass-Kanal im Haushaltgerät vorgesehen ist, durch den das Frischwasser zum Spülbehälter oder das Abwasser vom Spülbehälter direkt geleitet wird. Damit vermeidet das Frischwasser den Durchlauf durch den Latentwärmespeicher 1, was Zeit und unnötigen Energieaufwand für bestimmte Anwendungsfälle spart.

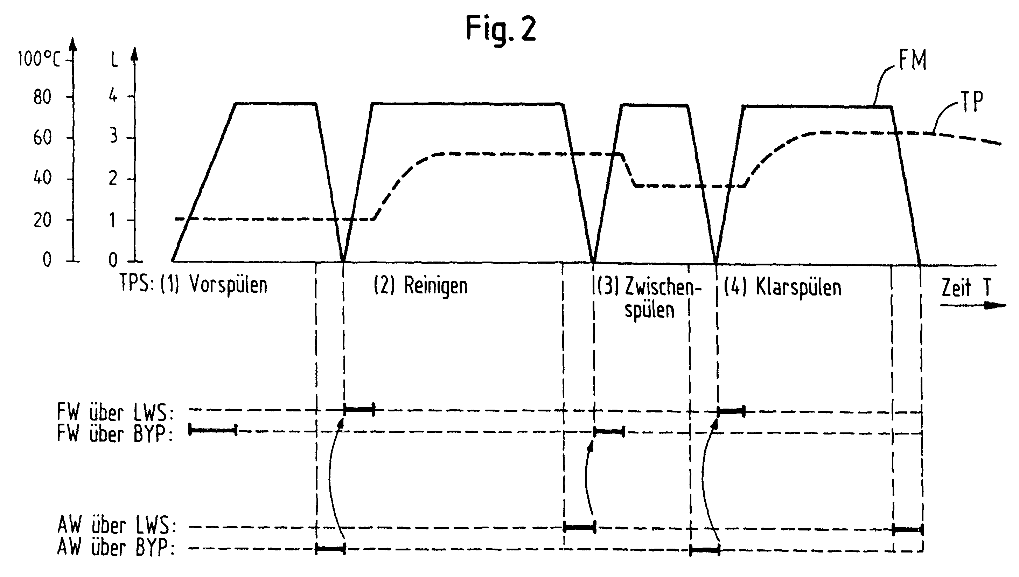

Fig. 2 zeigt die Steuerung des Durchlaufs von Frischwasser FW und Abwasser AW in Abhängigkeit der einzelnen Teilprogrammschritte TPS und der entsprechenden Füllmenge FM des Spülbehälters sowie der Temperatur TP der Spülflüssigkeit. Die Verläufe der Füllmenge FM und der maximalen Temperatur TP der Spülflüssigkeit sind über einer Zeitachse aufgetragen. Die Einstellung der Parameter für die einzelnen Teilprogrammschritte TPS erfolgt durch eine in dem Haushaltgerät angeordnete Steuereinrichtung entsprechend einer ausgewählten Spülintensität. Im vorliegenden Beispiel umfassen die Teilprogrammschritte TPS einen Schritt (1) "Vorspülen", einen Schritt (2) "Reinigen", einen Schritt (3) "Zwischenspülen", und einen letzten Schritt (4) "Klarspülen", die zu einem Spülprogramm zusammensetzbar sind. Der Spülbehälter wird für jeden Schritt (1) bis (4) bis zu einem Volumen von etwa vier Liter (L) gefüllt. Die für die Schritte (1) bis (4) erforderliche Temperatur variiert zwischen etwa 20 Grad Celsius (C°) beim "Vorspülen", einer Erhöhung auf etwa 55 Grad Celsius beim "Reinigen", einer Reduzierung auf etwa 30 Grad Celsius beim "Zwischenspülen" und einer erneuten Erhöhung auf etwa 70 Grad Celsius beim "Klarspülen".

Ein Bypass-Kanal BYP zur direkten Führung des Frischwassers FW zum Spülbehälter bzw. des Abwassers AW vom Spülbehälter ohne den Weg durch den Latentwärmespeicher LWS ist vorzugsweise im Haushaltgerät angeordnet. Das Frischwasser FW gelangt im Schritt (1) als unbeheizte Reinigungsflüssigkeit für das "Vorspülen" über den Bypass-Kanal BYP unmittelbar sowie im Schritt (2) für das "Reinigen" über den Latentwärmespeicher LWS in den Spülbehälter. Dabei erfolgt eine Übertragung der im Latentwärmespeicher LWS gespeicherten Wärmeenergie auf das im Frischwasserkanal gemäß dem Gleich-/und Gegenstromdurchlauf geführte Frischwasser statt, was den Energieaufwand zum Erhitzen der Reinigungsflüssigkeit deutlich senkt. Das abgepumpte Abwasser AW wird am Ende des Schritts (1) "Vorspülen" über den Bypass-Kanal BYP abgeleitet. Am Ende des Schritts (2) "Reinigen" fließt die erwärmte Reinigungsflüssigkeit über den Latentwärmespeicher LWS, der die im Abwasser AW enthaltene Wärmeenergie zur Zwischenspeicherung aufnimmt. Beispielsweise erfolgt nach dem Reinigungsvorgang eine Wärmerückgewinnung von 25 Grad Kelvin durch die Reduzierung auf von 55 Grad Celsius auf 30 Grad Celsius, die für den nächsten Spülvorgang mit erwärmter Flüssigkeit - z. B. für das "Klarspülen" - ausgenutzt werden kann.

Das Frischwasser FW fließt als unbeheizte Reinigungsflüssigkeit für den Schritt (3) "Zwischenspülen" über den Bypass-Kanal BYP sowie für den Schritt (4) "Klarspülen" über den Latentwärmespeicher LWS dem Spülbehälter zu. Wiederum kann eine Wärmeenergieübertragung durch Austausch der vom Speicher aufgenommenen Energie auf das im Frischwasserkanal gemäß dem Gleich-/und Gegenstromdurchlauf geführte Frischwasser stattfinden, was den Energieaufwand zum Erhitzen der Klarspülflüssigkeit deutlich senkt. Das abgepumpte Abwasser AW wird am Ende des Schritts (3) "Zwischenspülen" über den Bypass-Kanal BYP abgeleitet. Am Ende des Schritts (4) "Klarspülen" fließt die erwärmte Klarspülflüssigkeit über den Latentwärmespeicher LWS, der die im Abwasser AW enthaltene Wärmeenergie zur Zwischenspeicherung aufnimmt. Beispielsweise erfolgt nach dem Klarspülvorgang eine Wärmerückgewinnung von 50 Grad Kelvin durch die Reduzierung auf von 70 Grad Celsius auf 20 Grad Celsius, die für den nächsten Spülvorgang mit erwärmter Flüssigkeit - z.B. für das "Vorspülen" oder das Reinigen" - ausgenutzt werden kann.

Durch die erfindungsgemäße Integration des Latentwärmespeichers 1 in dem Frischwasserkanal 6, die in der Weise durchgeführt ist, daß sowohl ein Gleichstromdurchlauf GLS als auch ein Gegenstromdurchlauf GGS des Frischwassers 3 entsteht, wird eine besonders effektive Wärmeenergierückgewinnung erzielt, die den Energieverbrauch des Haushaltgeräts bei Spülvorgängen äußerst niedrig hält.

## Patentansprüche

1. Wasserführendes Haushaltgerät mit mindestens einem Abwasserkanal (4) für den Zulauf des von einem Spülbehälter abgepumpten Abwassers (2) und einem Frischwasserkanal (6) für den Zulauf des dem Spülbehälter zuzuführenden Frischwassers (3), und mit einem Latentwärmespeicher (1) zur Aufnahme von Wärmeenergie aus dem Abwasser (2), zur Speicherung der aufgenommenen Wärmeenergie sowie zur Abgabe von Wärmeenergie an das Frischwasser (3), wobei der Latentwärmespeicher (1) in dem Frischwasserkanal (6) integriert ist,
**dadurch gekennzeichnet, dass**
der Latentwärmespeicher (1) derart angeordnet ist, dass sowohl ein Gleichstromdurchlauf (GLS) als auch ein Gegenstromdurchlauf (GGS) des Frischwassers (3) zur Fließrichtung des Abwassers (2) entsteht, um eine Erhöhung der übertragbaren Wärmeenergie zu erreichen.

2. Wasserführendes Haushaltgerät nach Anspruch 1,
**dadurch gekennzeichnet, dass**
der Latentwärmespeicher (1) etwa mittig innerhalb des Frischwasserkanals (6) angeordnet ist.

3. Wasserführendes Haushaltgerät nach Anspruch 1 oder 2,
**dadurch gekennzeichnet, dass**
durch die Anordnung des Latentwärmespeichers (1) in dem Frischwasserkanal (6) zwei Teilkanäle (6', 6") ausgebildet sind, die den Gleichstromdurchlauf (GLS) vom Gegenstromdurchlauf (GGS) trennen, so dass der Latentwärmespeicher (1) beidseitig vom Frischwasser (3) umflossen wird.

4. Wasserführendes Haushaltgerät nach einem der vorhergehenden Ansprüche,
**dadurch gekennzeichnet, dass**
der Latentwärmespeicher (1) sowie Frischwasserkanal (6) und Abwasserkanal (4) von einer Wärmeisolierung (5) umschlossen sind.

5. Wasserführendes Haushaltgerät nach einem der vorhergehenden Ansprüche,
**dadurch gekennzeichnet, dass**
ein den Latentwärmespeicher (1) umgehender Bypass-Kanal (BYP) vorgesehen ist, durch den das Frischwasser (FW) zum Spülbehälter oder das Abwasser (AW) vom Spülbehälter direkt geleitet wird.

6. Wasserführendes Haushaltgerät nach Anspruch 5,
**dadurch gekennzeichnet, dass**
in Teilprogrammschritten eines Spülprogramms des wasserführenden Haushaltsgerätes, z. B. "Vorspülen" und "Zwischenspülen", die unbeheizte Reinigungsflüssigkeit benötigen, das Frischwassers (FW) zum Spülbehälter direkt mit dem Bypass-Kanal (BYP) leitbar ist.

## Claims

1. Water-conducting domestic appliance with at least one waste water channel (4) for the feed of the waste water (2) pumped out of a rinsing container and a fresh water channel (6) for the feed of fresh water (3) to be supplied to the rinsing container, and with a latent heat store (1) for the take up of heat energy from the waste water (2), for storage of the taken-up heat energy as well as for delivery of heat energy to the fresh water (3), wherein the latent heat store (1) is integrated into the fresh water channel (6), **characterised in that** the latent heat store (1) is arranged in such a manner that not only a co-current passage (GLS) of the fresh water (3), but also a counter-current passage (GGS) of the fresh water (3) relative to the flow direction of the waste water (2) takes place in order to achieve an increase in the transferrable heat energy.

2. Water-conducting domestic appliance according to claim 1, **characterised in that** the latent heat store (1) is arranged approximately centrally within the fresh water channel (6).

3. Water-conducting domestic appliance according to claim 1 or 2, **characterised in that** through the arrangement of the latent heat store (1) in the fresh water channel (6) there are formed two part channels (6', 6") which separate the co-current passage (GLS) from the counter-current passage (GGS) so that the latent heat store (1) is flowed around at both sides by the fresh water (3).

4. Water-conducting domestic appliance according to one of the preceding claims, **characterised in that** the latent heat store (1) as well as fresh water channel (6) and waste water channel (4) are enclosed by a thermal insulation (5).

5. Water-conducting domestic appliance according to one of the preceding claims, **characterised in that** a bypass channel (BYP), through which the fresh water (FW) is conducted directly to the rinsing container or the waste water (AW) is conducted directly from the rinsing container, is provided to circumvent the latent heat store (1).

6. Water-conducting domestic appliance according to claim 5, **characterised in that** the fresh water (FW) can be conducted by the bypass channel (BYP) directly to the rinsing container in part program steps of a washing program of the water-conducting domestic appliance which require unheated cleaning liquid, for example "prewash" and "intermediate wash".

## Revendications

1. Appareil ménager véhiculant de l'eau comprenant au moins une conduite d'eaux usées (4) pour l'arrivée des eaux usées (2) évacuées d'une cuve de nettoyage à l'aide d'une pompe et une conduite d'eau douce (6) pour l'arrivée de l'eau douce (3) destinée à alimenter la cuve de nettoyage, et comprenant un accumulateur de chaleur latente (1) pour absorber l'énergie thermique dans les eaux usées (2), pour emmagasiner l'énergie thermique absorbée ainsi que pour fournir l'énergie thermique à l'eau douce (3), ledit accumulateur de chaleur latente (1) étant intégré dans la conduite d'eau douce (6),
**caractérisé en ce que**
l'accumulateur de chaleur latente (1) est agencé de manière à produire à la fois un écoulement à courant parallèle (GLS) et un écoulement à contre-courant (GGS) de l'eau douce (3) par rapport au sens d'écoulement des eaux usées (2) afin d'obtenir une augmentation de l'énergie thermique transmissible.

2. Appareil ménager véhiculant de l'eau selon la revendication 1,
**caractérisé en ce que**
l'accumulateur de chaleur latente (1) est agencé approximativement au centre à l'intérieur de la conduite d'eau douce (6).

3. Appareil ménager véhiculant de l'eau selon la revendication 1 ou 2,
**caractérisé en ce que**
l'agencement de l'accumulateur de chaleur latente (1) dans la conduite d'eau douce (6) conduit à la formation de deux conduites partielles (6', 6") qui séparent l'écoulement à courant parallèle (GLS) de l'écoulement à contre-courant (GGS) de sorte que l'accumulateur de chaleur latente (1), de part et d'autre, est entouré de l'eau douce (3).

4. Appareil ménager véhiculant de l'eau selon l'une des revendications précédentes,
**caractérisé en ce que**
l'accumulateur de chaleur latente (1) ainsi que la conduite d'eau douce (6) et la conduite d'eaux usées (4) sont enveloppés d'une isolation thermique (5).

5. Appareil ménager véhiculant de l'eau selon l'une des revendications précédentes,
**caractérisé en ce que**
il est prévu une conduite by-pass (BYP) contournant l'accumulateur de chaleur latente (1), à travers laquelle l'eau douce (FW) est dirigée directement vers la cuve de nettoyage ou à travers laquelle passent les eaux usées (AW) sortant de la cuve de nettoyage.

6. Appareil ménager véhiculant de l'eau selon la revendication 5,
**caractérisé en ce que**
dans des étapes de sous-programme d'un programme de lavage de l'appareil ménager véhiculant de l'eau, p. ex. "prélavage" et "rinçage intermédiaire" nécessitant un liquide de nettoyage non chauffé, l'eau douce (FW) peut être dirigée directement vers la cuve de nettoyage à l'aide de la conduite by-pass (BYP).
